# EUROPÄISCHE PATENTSCHRIFT

(11) **EP 2 719 517 B1**
(45) Veröffentlichungstag und Bekanntmachung des Hinweises auf die Patenterteilung: **20.02.2019**
(21) Anmeldenummer: 13004768.1
(22) Anmeldetag: 02.10.2013
(51) Int. Cl.: B29C 45/44, B29C 45/26, B29C 45/17, B29C 45/40

(54) **SPRITZGIESSMASCHINE**
INJECTION MOULDING MACHINE
MACHINE DE MOULAGE PAR INJECTION

(30) Priorität: 12.10.2012 DE 102012020002
(43) Veröffentlichungstag der Anmeldung: 16.04.2014
(73) Patentinhaber: Wittmann Battenfeld GmbH, 2542 Kottingbrunn (AT)
(72) Erfinder: Philipp-Pichler, Martin, A-2542 Kottingbrunn (AT); Dretzky, Georg, HU-9400 Sopron (HU)
(74) Vertreter: Gosdin, Michael

(56) Entgegenhaltungen:
- EP-A1- 0 657 271
- DE-B3-102007 053 044
- US-A1- 2002 027 121

## Beschreibung

Die Erfindung betrifft eine Spritzgießmaschine, umfassend ein Spritzgießwerkzeug, in dem mindestens ein Werkzeugkern angeordnet ist, mit dem in einem Formteil eine in eine Achsrichtung hinterschnittsbehaftete Kontur, insbesondere ein Gewinde, erzeugt werden kann, wobei die Spritzgießmaschine weiterhin eine Ausdrehvorrichtung umfasst, mit der der Werkzeugkern aus dem fertig spritzgegossenen Formteil herausgedreht werden kann, wobei die Ausdrehvorrichtung eine drehbar angeordnete, hohlzylindrisch ausgebildete Ausdrehmutter aufweist, die mit einem Drehantrieb in Drehverbindung steht, wobei an der Ausdrehmutter ein profilierter Griffabschnitt angeordnet ist, der zum formschlüssigen Zusammenwirken mit einem Gegenprofil zum Drehen des Werkzeugkerns ausgebildet ist, wobei das Gegenprofil direkt oder indirekt am Werkzeugkern angeordnet ist.

Soll ein Spritzgieß-Formteil hergestellt haben, das in seinem Inneren eine - in eine Achsrichtung gesehen - hinterschnittsbehaftete Kontur aufweist, worunter insbesondere ein Gewinde zu verstehen ist, werden entsprechend ausgeformte Werkzeugkerne eingesetzt, deren profilierter Abschnitt (Gewindeabschnitt) beim Spritzgießen in die Werkzeugkavität hineinragt und von der Kunststoffschmelze umspritzt wird. Nach dem Aushärten des Kunststoffmaterials muss der Werkzeugkern aus dem Formteil entfernt werden, wozu die eingangs genannte Ausdrehvorrichtung benötigt wird.

Bekannt ist es dabei, das Werkzeug mit einer entsprechenden Vorrichtung auszustatten. Eine solche Lösung zeigt die DE 10 2007 053 044 B3**.** Ähnliche bzw. andere Konzepte sind aus der DE 21 32 009 B2, aus der US 3 718 419 A, aus der FR 2 110 252 A1, aus der US 2002/0027121 A1 und aus der EP 0 657 271 A1 bekannt.

Demgemäß wird auf oder in dem Spritzgießwerkzeug ein Antriebsmotor platziert, der über entsprechende Antriebselemente (zumeist über einen Riemenantrieb) den Werkzeugkern zu den gegebenen Phasen des Spritzgießzyklus (ein- und aus-)dreht. Diese Antriebselemente sind dann permanent mit den Werkzeugkernen verbunden.

Nachteilig ist, dass dies ein relativ hohes Zusatzgewicht für das Spritzgießwerkzeug, also für bewegte Massen bedeutet, was zu entsprechenden Beschränkungen der Bewegungen der Komponenten der Maschine führt. In der Folge verlängert sich tendenziell der Spritzgießzyklus beim Einsatz der genannten Ausdrehvorrichtung. Ferner nehmen die Ausdrehvorrichtungen einen gewissen Bauraum ein, der im Bereich des Spritzgießwerkzeugs generell knapp ist.

Der Erfindung liegt daher die **Aufgabe** zugrunde, eine Spritzgießmaschine der eingangs genannten Art so fortzubilden, dass die Betätigung, d. h. Drehung, des Werkzeugkerns bei geringem Gewicht des Werkzeugs und geringem Raumbedarf der Ausdrehvorrichtung ermöglicht wird. Damit soll infolge eines geringeren Gewichts des Werkzeugs die Möglichkeit geschaffen werden, schnellere Bewegungen zuzulassen und so die Zykluszeit beim Spritzgießen von Formteilen zu reduzieren. Dabei wird ein möglichst direkter Drehantrieb des Werkzeugkerns angestrebt. Ein weiterer Aspekt ist, dass auch das Auswerfen fertiger Formteile in einfacherer Weise möglich werden soll, wobei der diesbezügliche apparative Aufwand möglichst gering bleiben soll.

Die **Lösung** dieser Aufgabe durch die Erfindung ist dadurch gekennzeichnet, dass in der Ausdrehmutter ein sich in Achsrichtung erstreckender Auswerferstift angeordnet ist, der ein axiales Ende aufweist, das zum Zusammenwirken mit einem axialen Ende des Werkzeugkerns ausgebildet ist.

Die Ausdrehvorrichtung umfasst dabei bevorzugt ein Gehäuse, einen Rahmen oder ein ähnliches Element, an dem zur Bewegung der Ausdrehvorrichtung ein Aktuator angreifen kann; dieses Gehäuse bzw. dieser Rahmen ist relativ zum Spritzgießwerkzeug in Achsrichtung translatorisch beweglich gelagert. Dabei kann ein Aktuator vorhanden sein, mit dem die Ausdrehvorrichtung translatorisch auf das Spritzgießwerkzeug zu und von diesem weg bewegbar ist. Der Aktuator ist dabei bevorzugt als Exzenterantrieb ausgebildet, wobei ein Antriebsteil des Exzenterantriebs in ein Langloch in einem Teil der Ausdrehvorrichtung eingreift. Hiermit kann die Bewegung der Ausdrehvorrichtung in translatorische Richtung präzise und gezielt gesteuert werden.

Aber auch andere Aktuatoren können zum Einsatz kommen, die generell lediglich für eine translatorische Bewegung geeignet sein müssen. Hier ist beispielsweise an Linearantriebe und hydraulische oder pneumatische Kolben-Zylinder-Systeme gedacht.

Die Ausdrehvorrichtung ist bevorzugt als sich in Achsrichtung längserstreckende Einheit ausgebildet, die neben der Ausdrehmutter einen Drehantrieb in Form eines elektromotorischen Antriebs sowie ein zwischen dem elektromotorischen Antrieb und der Ausdrehmutter angeordnetes Getriebeelement aufweist. Der elektromotorische Antrieb ist bevorzugt ein Servomotor; das Getriebeelement ist vorzugsweise ein Planetengetriebe. Es ergibt sich vorteilhaft eine schlanke, sich längserstreckende Struktur für die Ausdrehvorrichtung.

Der an der Ausdrehmutter angeordnete profilierte Griffabschnitt und das Gegenprofil (insbesondere am Werkzeugkern) sind bevorzugt als Vielkantkontur ausgebildet.

Die Ausdrehmutter kann mit einem Sensorelement in Verbindung stehen, das die Drehbewegung der Ausdrehmutter detektieren kann. Damit kann die Drehung der Ausdrehmutter beim Aus- und Eindrehvorgang überwacht werden.

Das Spritzgießwerkzeug ist bevorzugt mit einem seiner Teile an einer Seite einer Werkzeugträgerplatte befestigt, wobei an der anderen Seite der Werkzeugträgerplatte die Ausdrehvorrichtung angeordnet ist und die Ausdrehmutter in eine Bohrung der Werkzeugträgerplatte eintreten kann und/oder der Werkzeugkern durch die Bohrung der Werkzeugträgerplatte zumindest abschnittsweise hindurch treten kann.

Es ist aber auch - insbesondere bei Einfachwerkzeugen in nicht-rotierender Bauart - möglich, dass die Ausdrehvorrichtung ständig mit der Ausdrehmutter (direkt oder indirekt) in das Gegenprofil im Werkzeugkern eingreift. Die Ausdrehvorrichtung muss in diesem Falle nicht bei jedem Spritzgießzyklus translatorisch hin und her bewegt werden. Dies kommt vor allem dann zum Einsatz, wenn besagte Werkzeuge in einer Standardmaschine eingesetzt werden.

Bevorzugt wird das Spritzgießwerkzeug als Drehwerkzeug ausgebildet, d. h. es hat (mindestens) zwei Kavitäten, die wechselweise zum Einsatz kommen. Gerade in einem solchen Falle macht es sich sehr positiv bemerkbar, wenn eine heranfahrbare Ausdrehvorrichtung zum Einsatz kommt, die mehrere verschiedene Werkzeugkerne betätigen kann.

Es wurde bereits oben erwähnt, dass der Griffabschnitt der Ausdrehmutter zum formschlüssigen Zusammenwirken mit einem Gegenprofil zum Drehen des Werkzeugkerns ausgebildet ist; dabei kann besagtes Gegenprofil direkt oder indirekt am Werkzeugkern angeordnet sein. Im Falle der direkten Anordnung des Gegenprofils am Werkzeugkern ist dieses Profil zumeist axial endseitig am stiftförmigen Werkzeugkern angeordnet.

Es ist aber auch eine indirekte Anordnung des Gegenprofils am Werkzeugkern möglich. In diesem Falle wird die Drehbewegung der Ausdrehmutter nicht direkt, sondern über ein Getriebeelement auf den Werkzeugkern bzw. mehrere Werkzeugkerne mit den formgebenden Abschnitten übertragen. Hiernach ist vorgesehen, dass ein drehangetriebenes Wellenelement (das das Gegenprofil trägt) über beispielsweise ein Zahnradgetriebe mehrere Werkzeugkerne drehantreibt. Demgemäß treibt die Ausdrehmutter über ihren profilierten Griffabschnitt das Gegenprofil an, wobei dies also an einer Art Zwischenwelle angeordnet ist, die ihrerseits über Zahnräder verschiedene Werkzeugkerne mit formgebenden Abschnitten antreibt.

Mit der vorgeschlagenen Ausgestaltung einer Spritzgießmaschine wird es möglich, die Ausdrehmechanik für den Werkzeugkern im Spritzgießwerkzeug direkt anzutreiben. Sehr vorteilhaft wird ein Auswerfen fertiger Formteil mit der Ausdrehvorrichtung möglich, so dass das (Ein- und Aus-)Drehen des Werkzeugkerns sowie das Auswerfen des fertigen Teils mit einem einzigen Bauelement, nämlich der Ausdrehvorrichtung, erfolgen kann.

Sowohl die Rotation der Auswerfmutter, als auch der Auswerferhub werden durch Bewegungen der Ausdrehvorrichtung bewerkstelligt, wobei hierfür jeweilige (rotatorische und translatorische) Lager vorgesehen sind.

Die vorgeschlagene Ausgestaltung erlaubt so die Unterbringung der Ausdrehvorrichtung auf geringstem Bauraum. Abgesehen vom Drehantrieb der Ausdrehmutter und dem translatorischen Antrieb der Ausdrehvorrichtung sind keine zusätzlichen Motoren nötig; Riemenantriebe am Werkzeug entfallen vollständig.

In der Zeichnung ist ein Ausführungsbeispiel der Erfindung dargestellt. Es zeigen:
- Fig. 1: in perspektivischer Darstellung einen Teil einer Spritzgießmaschine, wobei das Spritzgießwerkzeug sowie eine Ausdrehvorrichtung für einen Werkzeugkern näher dargestellt sind,
- Fig. 2: einen Längsschnitt durch die Ausdrehvorrichtung, die in Fig. 1 zu sehen ist,
- Fig. 3: einen Längsschnitt durch die Ausdrehvorrichtung samt Spritzgießwerkzeug, wobei die Ausdrehvorrichtung an einen Werkzeugkern des Spritzgießwerkzeugs angekoppelt ist und diesen dreht, wobei der Teilprozess des Ausdrehens des Werkzeugkerns dargestellt ist, und
- Fig. 4: in der Darstellung nach Fig. 3 die Ausdrehvorrichtung samt Spritzgießwerkzeug, wobei die Ausdrehvorrichtung immer noch an den Werkzeugkern des Spritzgießwerkzeugs angekoppelt ist, wobei jetzt aber der Teilprozess des Auswerfens des gespritzten Formteils dargestellt ist.

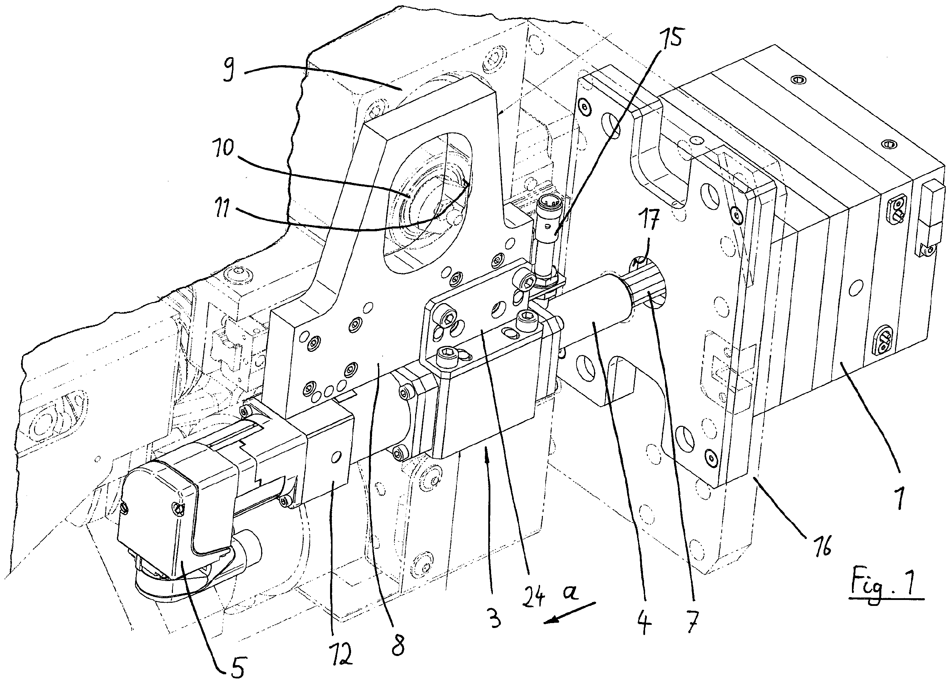

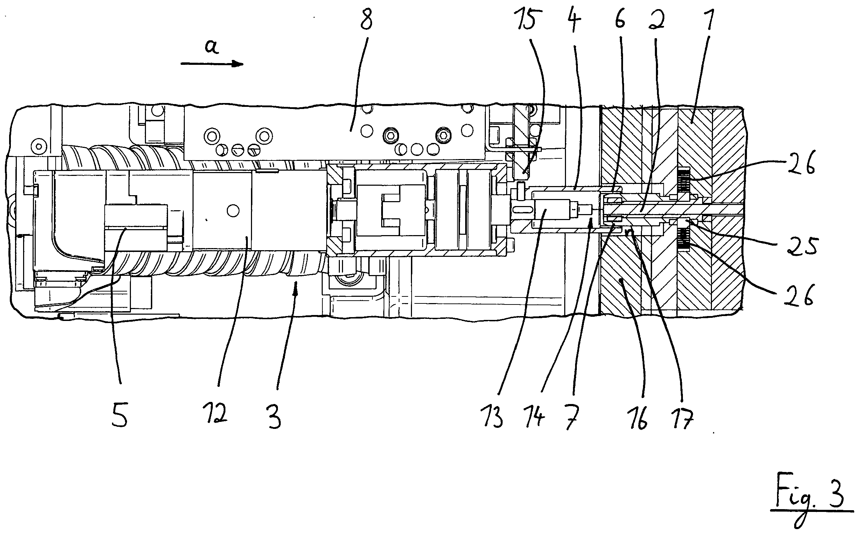

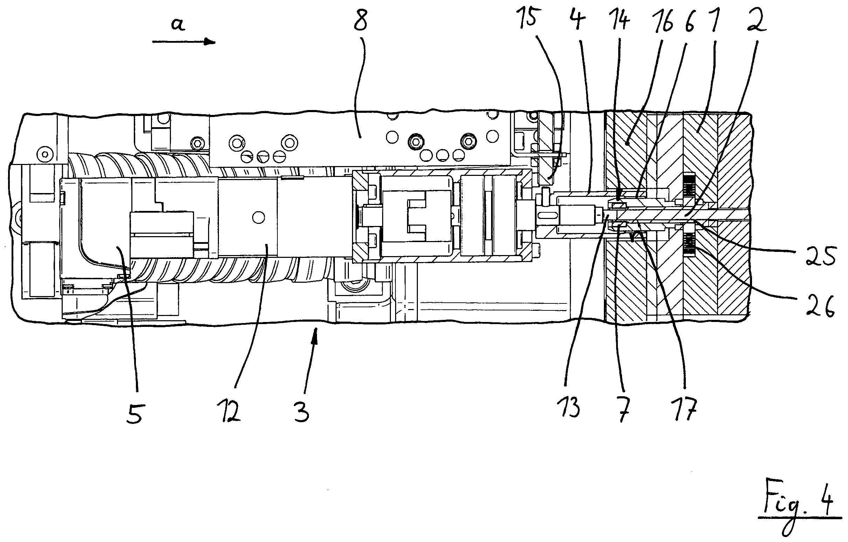

In Fig. 1 ist ein Teil einer Spritzgießmaschine zu sehen, nämlich ein Spritzgießwerkzeug 1, mit dem ein Formteil mit einem Innengewinde hergestellt werden kann. Das Spritzgießwerkzeug 1 ist im Ausführungsbeispiel als Mehrkavitäts-Werkzeug ausgebildet, mit dem pro Schuss vier Formteile hergestellt werden können. Hierzu weist das Spritzgießwerkzeug 1 mindestens einen Werkzeugkern 2 (s. Figuren 3 und 4) auf (im Ausführungsbeispiel: vier Werkzeugkern-Abschnitte mit formgebenden Bereichen), der während des Spritzgießvorgangs mit dem profilgebenden Abschnitt in die Werkzeugkavität hineinragt, so dass sich am Formteil die entsprechende Gegenkontur abbildet. Nach dem Aushärten des Kunststoffmaterials muss der profilgebende Abschnitt des Werkzeugkerns 2 aus dem Formteil herausgeschraubt werden. Hierfür ist eine Ausdrehvorrichtung 3 vorhanden.

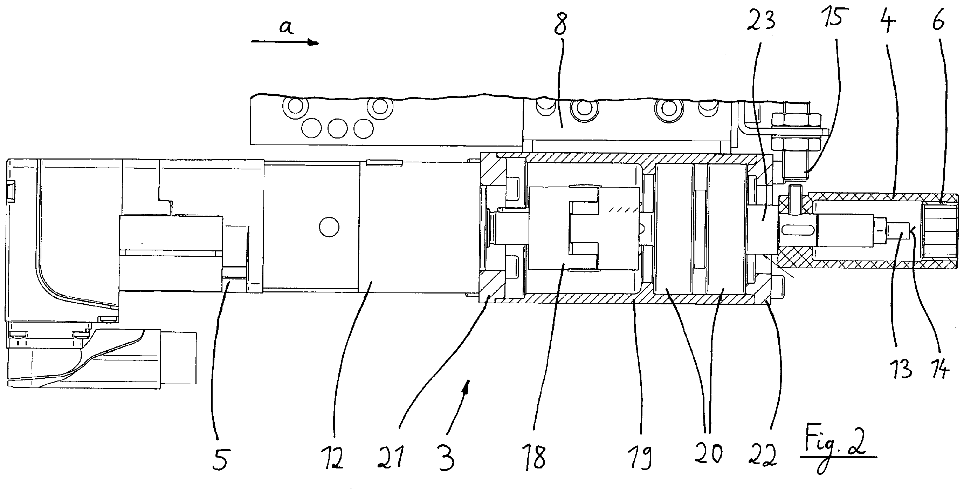

Wie in der Zusammenschau mit dem Längsschnitt gemäß Fig. 2 zu erkennen ist, hat die Ausdrehvorrichtung 3 als zentrales Element eine Ausdrehmutter 4. Diese ist als hohlzylindrisches Bauteil ausgeführt. Die Ausdrehmutter 4 ist mit einer Welle 23 drehfest verbunden, die in Wälzlagern 20 in einem Lagergehäuse 19 gelagert ist; das Lagergehäuse 19 ist beidseitig mit Lagerdeckeln 21 und 22 abgeschlossen.

Der Drehantrieb der Ausdrehmutter 4 erfolgt mittels eines Drehantriebs 5 in Form eines Servomotors, der ein Getriebeelement 12 in Form eines Planetengetriebes antreibt. Die Drehmomentübertragung vom Planetengetriebe 12 auf die Welle 23 erfolgt durch eine starre Kupplung 18, im Ausführungsbeispiel über eine Klauenkupplung.

Es entsteht so eine Ausdrehvorrichtung 3 in Form einer sich längserstreckenden Einheit, wobei diese Erstreckungsrichtung eine Achsrichtung a ist, entlang sich die Ausdrehvorrichtung 3 translatorisch auf das Spritzgießwerkzeug 1 zu und von diesem wieder weg bewegen kann.

Hierfür ist - wie es aus Fig. 1 ersichtlich ist - ein Aktuator 9 vorhanden, der an einem Gehäuse oder Rahmen 8 der Ausdrehvorrichtung 3 angreift und für die besagte Bewegung in Achsrichtung a sorgt. Im vorliegenden Falle ist das Gehäuse bzw. der Rahmen 8 als Auswerferplatte ausgebildet, die fest mit dem Drehantrieb 5, dem Getriebeelement 12 und dem Lagergehäuse 19 verbunden ist. Hierfür ist ein Befestigungswinkel 24 vorgesehen.

Im Ausführungsbeispiel ist der Aktuator 9 als Exzenterantrieb ausgebildet, d. h. der Aktuator 9 weist ein Antriebsteil 10 des Exzenterantriebs auf, das in ein Langloch 11 im Gehäuse bzw. Rahmen 8 eingreift. Wird der Aktuator 9 betätigt, verfährt demgemäß die gesamte Ausdrehvorrichtung 3 in Achsrichtung a. Natürlich sind auch andere Arten von Aktuatoren möglich.

In der Ausdrehmutter 4 ist in einem axial endseitigen Bereich ein profilierter Griffabschnitt 6 angeordnet, beispielsweise ausgeführt als Vielkeilprofil. Der Werkzeugkern 2 hat ein korrespondierendes Gegenprofil 7. Werden die Ausdrehmutter 4 und der Werkzeugkern 2 axial aufeinander geschoben (mittels des Aktuators 9), ergibt sich ein formschlüssiger Verbund, der die Übertragung eines Drehmoments von der Ausdrehmutter 4 auf den Werkzeugkern 2 ermöglicht.

Im Ausführungsbeispiel ist dabei eine Lösung zu sehen, bei der der Teil des Werkzeugkerns, der den formgebenden Abschnitt zur Ausformung des Formteils trägt, nicht direkt das Gegenprofil 7 trägt; vielmehr ist in den Figuren der Teil des Werkzeugkerns, der besagten formgebenden Abschnitt aufweist, selber gar nicht dargestellt. Zu sehen ist vielmehr, dass ein mit der Bezugsziffer 2 bezeichnetes wellenförmiges Teil (das Bestandteil der Werkzeugkern-Mechanik ist) das Gegenprofil 7 aufweist und von der Ausdrehmutter 4 gedreht werden kann. Dieses Teil 2 trägt ein Zahnrad 25. Das Zahnrad 25 kämmt mit vier weiteren Zahnrädern 26 (zwei sind in den Figuren 3 und 4 zu sehen, zwei weitere nicht), die ihrerseits erst die formgebenden Abschnitte des Werkzeugkerns aufweisen. Der Drehantrieb der formgebenden Abschnitte des Werkzeugkerns erfolgt hier also indirekt über Zahnradgetriebe. Somit kann durch Drehung einer Antriebswelle (Teil 2 in den Figuren 3 und 4), die das Gegenprofil 7 aufweist, eine Anzahl von Kernen mit formgebendem Abschnitt angetrieben werden.

Genauso ist aber generell auch ein direkter Antrieb der Werkzeugkerne mit formgebendem Abschnitt möglich.

Damit besagtes axiales Aufeinanderschieben erfolgen kann, ist das Spritzgießwerkzeug 1 mit einem seiner Teile auf einer Werkzeugträgerplatte 16 festgelegt. Die Werkzeugträgerplatte 16 hat eine Bohrung 17, durch die das axiale Ende des Werkzeugkerns 2 hindurch ragen kann (s. hierzu Fig. 1). Es ist aber auch möglich, dass die Ausdrehmutter 4 in die Bohrung 17 in die Werkzeugträgerplatte 16 hineinragt, um in Formschluss mit dem Gegenprofil 7 des Werkzeugkerns 2 zu gelangen (s. Fig. 3 und Fig. 4).

Die Drehbewegung der Ausdrehmutter 4 wird von einem Sensorelement 15 erfasst und so überwacht.

Konzentrisch zur Achse der Ausdrehmutter 4 ist im Inneren derselben ein Auswerferstift 13 befestigt. Dieser hat ein axiales Ende 14, das zur Übertragung einer Auswerfbewegung auf den Werkzeugkern (bzw. das mit der Bezugsziffer 2 bezeichnete Teil) ausgebildet ist. Diese Auswerfbewegung wird vom Aktuator 9 vorgenommen.

Der Prozessablauf sieht wie folgt aus:
Bei in das Werkzeug eingedrehtem Werkzeugkern 2 und geschlossenem Spritzgießwerkzeug 1 wird das Formteil gespritzt. Der Werkzeugkern 2 mit seinem formgebenden Gewindeabschnitt wird dabei umspritzt. Nach der Verfestigung des Kunststoffmaterials des Formteils öffnet das Spritzgießwerkzeug 1. Die Ausdrehvorrichtung 3 wird translatorisch an die Rückseite der Werkzeugträgerplatte 16 herangefahren, so dass die Ausdrehmutter 4 mit ihrem profilierten Griffabschnitt 6 (Vielkantprofil, Passfeder oder ähnliches) an das axiale Ende des Werkzeugkerns 2 herangefahren wird. Zum leichten Einführen ist eine entsprechende Einführschräge am Gegenprofil 7 und gegebenenfalls auch am Griffabschnitt 6 vorgesehen. Dies erfolgt, bis der profilierte Griffabschnitt 6 auf das Gegenprofil 7 am Werkzeugkern 2 aufgeschoben ist und so ein formschlüssiger Drehverbund zwischen der Ausdrehmutter 4 und dem Werkzeugkern 2 vorliegt. Allerdings ist aufgrund des sich über eine hinreichende axiale Strecke ausdehnenden Gegenprofils 7 die Möglichkeit gegeben, dass im Eingriff des Griffabschnitts 6 und des Gegenprofils 7 eine relative axiale Bewegung zwischen der Ausdrehmutter 4 und dem Werkzeugkern 2 stattfinden kann.

Der Servomotor 5 dreht die Ausdrehmutter 4 über das Planetengetriebe 12 gemäß einem vorgegebenen Drehwinkelverlauf präzise, so dass der Werkzeugkern 2 in definierter Weise aus dem Formteil vollständig ausgeschraubt werden kann.

Wenn der Werkzeugkern mit seinem formgebenden Gewindeabschnitt vollständig aus dem Formteil herausgedreht worden ist, wird die Drehung der Ausdrehmutter 4 angehalten; die Maschinensteuerung veranlasst über den Aktuator 9, dass die gesamte Ausdrehvorrichtung 3 jetzt weiter in Achsrichtung a auf das Spritzgießwerkzeug 2 hin verfahren wird. Der in der Ausdrehmutter 4 vorhandene Auswerferstift 13 legt sich dabei mit seinem axialen Ende 14 an die Stirnseite des mit der Bezugsziffer 2 bezeichneten Teils (Werkzeugkerns) an und drückt diesen in Richtung Werkzeuginneres. Das Teil 2 wirkt dann als auswerfendes Bauteil und schiebt bei geöffnetem Werkzeug das fertige Formteil bzw. die fertigen Formteile aus der Werkzeugkavität heraus.

Nach dem Auswerfen des fertigen Formteils wird die Ausdrehmutter 4 in die Gegenrichtung gedreht, bis dass der Werkzeugkern 2 in Vorbereitung für den nächsten Schuss wieder in das Spritzgießwerkzeug 1 eingeschraubt ist.

Anschließend wird die Ausdrehvorrichtung 3 zurückgezogen, d. h. in Achsrichtung a vom Spritzgießwerkzeug 1 weg bewegt. Der nächste Zyklus kann beginnen.

### Bezugszeichenliste:

- 1: Spritzgießwerkzeug
- 2: Werkzeugkern
- 3: Ausdrehvorrichtung
- 4: Ausdrehmutter
- 5: Drehantrieb (Servomotor)
- 6: profilierter Griffabschnitt
- 7: Gegenprofil am Werkzeugkern
- 8: Gehäuse / Rahmen (Auswerferplatte)
- 9: Aktuator
- 10: Antriebsteil des Exzenterantriebs
- 11: Langloch
- 12: Getriebeelement (Planetengetriebe)
- 13: Auswerferstift
- 14: axiales Ende des Auswerferstifts
- 15: Sensorelement
- 16: Werkzeugträgerplatte
- 17: Bohrung
- 18: Kupplung (Klauenkupplung)
- 19: Lagergehäuse
- 20: Wälzlager
- 21: Lagerdeckel
- 22: Lagerdeckel
- 23: Welle
- 24: Befestigungswinkel
- 25: Zahnrad
- 26: Zahnrad

- a: Achsrichtung

## Patentansprüche

1. Spritzgießmaschine, umfassend ein Spritzgießwerkzeug (1), in dem mindestens ein Werkzeugkern (2) angeordnet ist, mit dem in einem Formteil eine in eine Achsrichtung (a) hinterschnittsbehaftete Kontur, insbesondere ein Gewinde, erzeugt werden kann, wobei die Spritzgießmaschine weiterhin eine Ausdrehvorrichtung (3) umfasst, mit der der Werkzeugkern (2) aus dem fertig spritzgegossenen Formteil herausgedreht werden kann, wobei die Ausdrehvorrichtung (3) eine drehbar angeordnete, hohlzylindrisch ausgebildete Ausdrehmutter (4) aufweist, die mit einem Drehantrieb (5) in Drehverbindung steht, wobei an der Ausdrehmutter (4) ein profilierter Griffabschnitt (6) angeordnet ist, der zum formschlüssigen Zusammenwirken mit einem Gegenprofil (7) zum Drehen des Werkzeugkerns (2) ausgebildet ist, wobei das Gegenprofil (7) direkt oder indirekt am Werkzeugkern (2) angeordnet ist,
**dadurch gekennzeichnet, dass**
in der Ausdrehmutter (4) ein sich in Achsrichtung (a) erstreckender Auswerferstift (13) angeordnet ist, der ein axiales Ende (14) aufweist, das zum Zusammenwirken mit einem axialen Ende des Werkzeugkerns (2) ausgebildet ist.

2. Spritzgießmaschine nach Anspruch 1, **dadurch gekennzeichnet, dass** die Ausdrehvorrichtung (3) ein Gehäuse (8) oder einen Rahmen umfasst, der oder der relativ zum Spritzgießwerkzeug (1) in Achsrichtung (a) translatorisch beweglich gelagert ist, wobei ein Aktuator (9) vorhanden ist, mit dem die Ausdrehvorrichtung (3) translatorisch auf das Spritzgießwerkzeug (1) zu und von diesem weg bewegbar ist.

3. Spritzgießmaschine nach Anspruch 2, **dadurch gekennzeichnet, dass** der Aktuator (9) als Exzenterantrieb ausgebildet ist, wobei ein Antriebsteil (10) des Exzenterantriebs in ein Langloch (11) in einem Teil der Ausdrehvorrichtung (3) eingreift.

4. Spritzgießmaschine nach einem der Ansprüche 1 bis 3, **dadurch gekennzeichnet, dass** die Ausdrehvorrichtung (3) als sich in Achsrichtung (a) längserstreckende Einheit ausgebildet ist, die neben der Ausdrehmutter (4) den Drehantrieb (5) in Form eines elektromotorischen Antriebs sowie ein zwischen dem elektromotorischen Antrieb und der Ausdrehmutter (4) angeordnetes Getriebeelement (12) aufweist.

5. Spritzgießmaschine nach Anspruch 4, **dadurch gekennzeichnet, dass** der elektromotorische Antrieb (5) ein Servomotor ist.

6. Spritzgießmaschine nach Anspruch 4 oder 5, **dadurch gekennzeichnet, dass** das Getriebeelement (12) ein Planetengetriebe ist.

7. Spritzgießmaschine nach einem der Ansprüche 1 bis 6, **dadurch gekennzeichnet, dass** der an der Ausdrehmutter (4) angeordnete profilierte Griffabschnitt (6) und das Gegenprofil (7) als Vielkantkontur ausgebildet sind.

8. Spritzgießmaschine nach einem der Ansprüche 1 bis 7, **dadurch gekennzeichnet, dass** die Ausdrehmutter (4) mit einem Sensorelement (15) in Verbindung steht, das die Drehbewegung der Ausdrehmutter (4) detektieren kann.

9. Spritzgießmaschine nach einem der Ansprüche 1 bis 8, **dadurch gekennzeichnet, dass** das Spritzgießwerkzeug (1) mit einem seiner Teile an einer Seite einer Werkzeugträgerplatte (16) befestigt ist, wobei an der anderen Seite der Werkzeugträgerplatte (16) die Ausdrehvorrichtung (3) angeordnet ist und die Ausdrehmutter (4) in eine Bohrung (17) der Werkzeugträgerplatte (16) eintreten kann und/oder der Werkzeugkern (2) durch die Bohrung (17) der Werkzeugträgerplatte (16) zumindest abschnittsweise hindurch treten kann.

## Claims

1. Injection moulding machine, comprising an injection moulding tool (1) in which at least a core of the tool (2) is arranged by which a contour which has an undercut in an axial direction (a), especially a thread, can be produced in a moulded part, wherein the injection moulding machine furthermore comprises a rotating device (3) by which the core of the tool (2) can be rotated out of the finished injection moulded part, wherein the rotating device (3) comprises a rotatable hollow-cylindrical rotating screw nut (4) which is rotary joint to a rotational drive (5), wherein a profiled grip section (6) is arranged at the rotating screw nut (4) which is designed for the form-locking cooperation with a counter profile (7) for rotating the core of the tool (2), wherein the counter profile (7) is directly or indirectly arranged at the core of the tool (2),
**characterized in that**
in the rotating screw nut (4) an ejector pin (13) extending in the axial direction (a) is arranged which has an axial end (14) which is designed for the cooperation with an axial end of the core of the tool (2).

2. Injection moulding machine according to claim 1, **characterized in that** the rotating device (3) comprises a housing (8) or a frame which is supported translational movable in axial direction (a) relatively to the injection moulding tool (1), wherein an actuator (9) is provided by which the rotating device (3) can be moved translational to the injection moulding tool or away from the same.

3. Injection moulding machine according to claim 2, **characterized in that** the actuator (9) is designed as excentric drive, wherein a driving part (10) of the excentric drive engages into a long hole (11) in a part of the rotating device (3).

4. Injection moulding machine according to one of claims 1 to 3, **characterized in that** the rotating device (3) is designed as unit extending longitudinally in axial direction (a) which comprises beside the rotating screw nut (4) the rotational drive (5) being an electric motor drive as well as a gear element (12) which is arranged between the electric motor drive and the rotating screw nut (4).

5. Injection moulding machine according to claim 4, **characterized in that** the electric motor drive (5) is a servomotor.

6. Injection moulding machine according to claim 4 or 5, **characterized in that** the gear element (12) is a planetary drive.

7. Injection moulding machine according to one of claims 1 to 6, **characterized in that** the profiled grip section (6) which is arranged at the rotating screw nut (4) and the counter profile (7) are designed as multicornered contour.

8. Injection moulding machine according to one of claims 1 to 7, **characterized in that** the rotating screw nut (4) is connected with a sensor element (15) which can detect the rotational movement of the rotating screw nut (4).

9. Injection moulding machine according to one of claims 1 to 8, **characterized in that** the injection moulding tool (1) is fixed with one of its parts at a side of a tool carrier plate (16), wherein the rotating device (3) is arranged at the other side of the tool carrier plate (16) and the rotating screw nut (4) can enter into a bore (17) of the tool carrier plate (16) and/or the core of the tool (2) can at least partially pass through the bore (17) of the tool carrier plate (16).

## Revendications

1. Machine de moulage par injection, comportant un outil de moulage par injection (1) dans lequel au moins un noyau d'outil (2) est disposé, à l'aide duquel un contour présentant une contre-dépouille dans une direction axiale (a), en particulier un filetage, peut être produit dans une pièce moulée, la machine de moulage par injection comportant en outre un dispositif de sortie par rotation (3) à l'aide duquel le noyau d'outil (2) peut être sorti par rotation hors de la pièce moulée par injection de manière finie, le dispositif de sortie par rotation (3) comprenant un écrou de sortie par rotation (4) disposé de manière rotative et réalisé sous forme cylindrique creuse, lequel est en liaison rotative avec un entraînement rotatif (5), une partie de préhension profilée (6) étant disposée sur l'écrou de sortie par rotation (4), laquelle est conçue pour coopérer par complémentarité de forme avec un profil complémentaire (7) servant à faire tourner le noyau d'outil (2), le profil complémentaire (7) étant disposé directement ou indirectement sur le noyau d'outil (2),
**caractérisée en ce**
**qu'**une tige d'éjection (13) s'étendant dans la direction axiale (a) est disposée dans l'écrou de sortie par rotation (4), laquelle tige d'éjection comprend une extrémité axiale (14) qui est conçue pour coopérer avec une extrémité axiale du noyau d'outil (2).

2. Machine de moulage par injection selon la revendication 1, **caractérisée en ce que** le dispositif de sortie par rotation (3) comporte un boîtier (8) ou un cadre qui est monté de manière mobile en translation par rapport à l'outil de moulage par injection (1) dans la direction axiale (a), un actionneur (9) étant présent, à l'aide duquel le dispositif de sortie par rotation (3) peut être déplacé en translation vers l'outil de moulage par injection (1) et à l'écart de celuici.

3. Machine de moulage par injection selon la revendication 2, **caractérisée en ce que** l'actionneur (9) est réalisé sous forme d'entraînement à excentrique, une partie d'entraînement (10) de l'entraînement à excentrique venant en prise dans un trou oblong (11) dans une partie du dispositif de sortie par rotation (3).

4. Machine de moulage par injection selon l'une quelconque des revendications 1 à 3, **caractérisée en ce que** le dispositif de sortie par rotation (3) est réalisé sous forme d'unité s'étendant longitudinalement dans la direction axiale (a), laquelle unité comprend, en plus de l'écrou de sortie par rotation (4), l'entraînement rotatif (5) sous la forme d'un entraînement électromotorisé ainsi qu'un élément de transmission (12) disposé entre l'entraînement électromotorisé et l'écrou de sortie par rotation (4) .

5. Machine de moulage par injection selon la revendication 4, **caractérisée en ce que** l'entraînement électromotorisé (5) est un servomoteur.

6. Machine de moulage par injection selon la revendication 4 ou 5, **caractérisée en ce que** l'élément de transmission (12) est une transmission planétaire.

7. Machine de moulage par injection selon l'une quelconque des revendications 1 à 6, **caractérisée en ce que** la partie de préhension profilée (6) disposée sur l'écrou de sortie par rotation (4) et le profil complémentaire (7) sont réalisés sous forme de contour polygonal.

8. Machine de moulage par injection selon l'une quelconque des revendications 1 à 7, **caractérisée en ce que** l'écrou de sortie par rotation (4) est en liaison avec un élément de détection (15) qui peut détecter le mouvement rotatif de l'écrou de sortie par rotation (4).

9. Machine de moulage par injection selon l'une quelconque des revendications 1 à 8, **caractérisée en ce que** l'outil de moulage par injection (1) est fixé, par l'une de ses parties, à un côté d'une plaque porte-outil (16), le dispositif de sortie par rotation (3) étant disposé sur l'autre côté de la plaque porte-outil (16) et l'écrou de sortie par rotation (4) pouvant pénétrer dans un alésage (17) de la plaque porte-outil (16) et/ou le noyau d'outil (2) pouvant passer à travers l'alésage (17) de la plaque porte-outil (16) au moins dans certaines zones.
